(19) Europäisches Patentamt
European Patent Office
Office européen des brevets

(11) **EP 4 462 311 A1**

(12) **EUROPEAN PATENT APPLICATION**
published in accordance with Art. 153(4) EPC

(43) Date of publication:
**13.11.2024 Bulletin 2024/46**

(21) Application number: **22932392.8**

(22) Date of filing: **22.07.2022**

(51) International Patent Classification (IPC):
**G06N 3/08** (2023.01)          **G06N 3/04** (2023.01)
**G06N 5/04** (2023.01)

(52) Cooperative Patent Classification (CPC):
**G06N 3/04; G06N 3/08; G06N 5/04**

(86) International application number:
**PCT/KR2022/010829**

(87) International publication number:
**WO 2023/177025 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2022 KR 20220032933**

(71) Applicant: **Seoul National University R&DB
Foundation
Seoul 08826 (KR)**

(72) Inventors:
• **JEON, Dongsuk
  Seoul 08826 (KR)**
• **LEE, Sun Woo
  Seoul 08826 (KR)**

(74) Representative: **Manitz Finsterwald
Patent- und Rechtsanwaltspartnerschaft mbB
Martin-Greif-Strasse 1
80336 München (DE)**

(54) **METHOD AND APPARATUS FOR COMPUTING ARTIFICIAL NEURAL NETWORK BASED ON PARAMETER QUANTIZATION USING HYSTERESIS**

(57)     Artificial neural network calculation method and device based on parameter quantization using hysteresis are provided to reduce a size of an artificial neural network. By applying hysteresis to parameter quantization, variability may be reduced, each parameter may be trained more stably, and the performance of a quantized model is improved.

FIG. 4

determine parameter gradient of parameter based on first quantization parameter value of parameter —— S1

determine second original parameter value based on first original parameter value associated with parameter gradient and first quantization parameter —— S2

determine second quantization parameter value associated with second original parameter value based on result of comparing first quantization parameter value with second original parameter value —— S3

**Description**

BACKGROUND

The present disclosure relates to an artificial neural network calculation method and device based on parameter quantization, and particularly to an artificial neural network calculation method and device based on parameter quantization using hysteresis to reduce an artificial neural network.

Description to be given below is merely for the purpose of providing background information related to embodiments of the present disclosure, and does not necessarily constitute the conventional technology.

Artificial neural networks are being applied to various fields and are showing good performance. For higher performance, the sizes of the artificial neural networks continuously increase, and accordingly, the power consumed for training and inference is greatly increasing.

Recently, deep learning-based applications have been run on various mobile platforms, such as smartphones, and model quantization is also being applied to high-performance servers to reduce power consumption and hardware implementation costs during training. The model quantization technique is one of lightweight techniques for deep learning models.

Model quantization may greatly reduce power consumption by reducing a memory size required for operating an artificial neural network and simplifying calculators required for multiplication, addition, and so on, but there is a disadvantage in that the performance decreases more and more each time the precision is reduced.

Meanwhile, the existing model quantization technique focuses on minimizing an error through the round to nearest method when each parameter of an artificial neural network is quantized.

However, in the conventional technique, when a parameter value is large based on a rounding boundary, the parameter value is raised, and when the parameter value is small, the parameter value is lowered, and as a result, the rounding boundary is varied by a very small change in the parameter value, and a quantization result is greatly varied. Limitation is one of main factors in the performance degradation that occur in a round to nearest-based quantized model.

Accordingly, a stable parameter quantization technology that may be well adapted to a change in parameter value is required.

Meanwhile, the conventional art described above is technical information that the inventor has for deriving the present disclosure or obtained in the process of deriving the present disclosure and may not necessarily be said to be known art disclosed to the public before the present disclosure is filed.

SUMMARY

An object of the present disclosure is to provide an artificial neural network calculation method and device based on parameter quantization using hysteresis.

Another object of the present disclosure is to provide a stable parameter quantization technique that may be effectively adapted to a change in parameter value and a lightweight artificial neural network method using the same.

Objects of the present disclosure are not limited to the object described above, and other objects and advantages of the present disclosure that are not described above may be understood through the following description and will be more clearly understood through embodiments of the present disclosure. Also, it will also be appreciated that objects and advantages of the present disclosure may be implemented by means and combinations thereof as set forth in the claims.

According to an aspect of the present disclosure, an artificial neural network calculation method based on parameter quantization, which is performed by an artificial neural network calculation device including a processor, includes a first step of determining a parameter gradient of a parameter based on a first quantization parameter value of the parameter of the artificial neural network, a second step of determining a second original parameter value of the parameter based on a first original parameter value associated with the parameter gradient and the first quantization parameter value, and a third step of determining a second quantization parameter value associated with the second original parameter value based on a result of comparing the first quantization parameter value with the second original parameter value.

According to another aspect of the present disclosure, an artificial neural network calculation device based on parameter quantization includes a memory storing at least one instruction, and a processor, wherein, when the at least one instruction is executed by the processor, the at least one instruction causes the processor to perform a first operation of determining a parameter gradient of a parameter based on a first quantization parameter value of the parameter of the artificial neural network, a second operation of determining a second original parameter value of the parameter based on a first original parameter value associated with the parameter gradient and the first quantization parameter value, and a third operation of determining a second quantization parameter value associated with the second original parameter value based on a result of comparing the first quantization parameter value with the second original parameter value.

Other aspects, features, and advantages in addition to the description given above will become apparent from the following drawings, claims, and detailed description of the invention.

According to the embodiment, hysteresis may be applied to parameter quantization, and thereby, variability may be reduced, and each parameter may be trained more stably.

According to the embodiment, the performance of a quantization model is increased, and thus, deep learning technology at a level equivalent to a level of an original model based on high-precision parameters may be implemented with lower power consumption and smaller hardware.

Effects of the present disclosure are not limited to the described effects, and other effects not described will be clearly understood by those skilled in the art from the above description.

BRIEF DESCRIPTION OF THE DRAWINGS

Embodiments of the inventive concept will be more clearly understood from the following detailed description taken in conjunction with the accompanying drawings in which:

FIG. 1 illustrates an example of parameter quantization using round to nearest;
FIG. 2 is a diagram illustrating quantization using hysteresis in artificial neural network calculation according to an embodiment;
FIG. 3 is a block diagram of an artificial neural network calculation device according to an embodiment;
FIG. 4 is a flowchart of an artificial neural network calculation method according to an embodiment;
FIG. 5 is a flowchart of a training process using an artificial neural network calculation method according to an embodiment;
FIG. 6 illustrates an example of a result of parameter quantization using hysteresis according to an embodiment; and
FIG. 7 is a flowchart of an inference process using an artificial neural network calculation method according to an embodiment.

DETAILED DESCRIPTION OF THE EMBODIMENTS

Hereinafter, the present disclosure will be described in more detail with reference to the drawings. The present disclosure may be implemented in many different forms and is not limited to the embodiments described herein. In the following embodiments, parts not directly related to the description are omitted to clearly describe the present disclosure, but this does not mean that such omitted elements are unnecessary when implementing a device or system to which the idea of the present disclosure is applied. In addition, the same reference numerals are used for identical or similar components throughout the specification.

In the following description, terms, such as first and second, may be used to describe various components, but the components should not be limited by the terms, and the terms are used only for the purpose of distinguishing one component from other components. In addition, in the following description, singular expressions include plural expressions, unless the context clearly indicates otherwise.

In the following description, it should be understood that terms, such as "comprise", "include", and "have", are intended to designate the presence of features, numbers, steps, operations, configuration elements, components, or combinations thereof described in the specification and do not exclude in advance the presence or addition of one or more other features, numbers, steps, operations, configuration elements, components, or combinations thereof.

The present disclosure will be described in detail below with reference to the drawings.

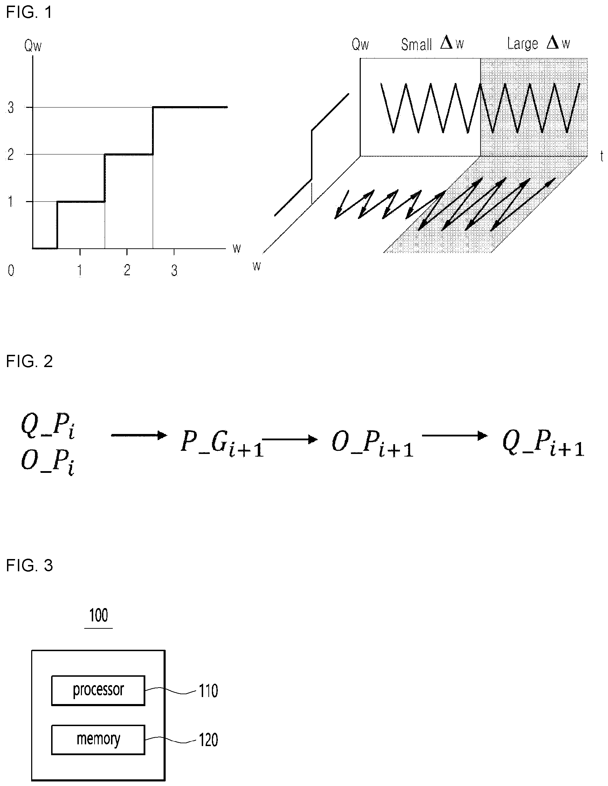

FIG. 1 illustrates an example of parameter quantization using round to nearest.

In FIG. 1, when a parameter of an artificial neural network is referred to as W and a quantization result is referred to as QW, the quantization result QW is immediately shaken regardless of whether the parameter W changes slightly or greatly. This means that a change amount $\Delta W$ of the parameter W is regardless of a change $\Delta QW$ of the quantization result QW, and accordingly, training is unstable, resulting in training failure or significant performance degradation in low-precision parameters.

FIG. 2 is a diagram illustrating quantization using hysteresis in artificial neural network calculation according to an embodiment.

The artificial neural network calculation based on parameter quantization, according to an embodiment, uses hysteresis. The hysteresis indicates a phenomenon in which the current state of a given system is dependent on the history of a change in the past state of the given system. In an embodiment, the parameter quantization using hysteresis means determining a current value (for example, an original precision value $O\_P_{i+1}$ and a quantized value $Q\_P_{i+1}$) of a parameter of an artificial neural network depending on a course of a past value (for example, an original precision value $O\_P_i$ and a quantized value $Q\_P_i$) of the corresponding parameter.

The artificial neural network calculation based on parameter quantization according to an embodiment inputs the original precision value ($O\_P_i$) of a parameter of the i-th training cycle and the quantized value $Q\_P_i$ associated with the original precision value $O\_P_i$ and outputs a gradient $P\_W_{i+1}$, the original precision value $O\_P_{i+1}$, and the quantized value $Q\_P_{i+1}$ associated with the original precision value $O\_P_{i+1}$ of the corresponding parameter in the i+1-th training cycle.

Here, the quantized values $Q\_P_i$ and $Q\_P_{i+1}$ are low-precision values, and the original precision values $O\_P_i$ and $O\_P_{i+1}$ are high-precision values with higher precision than the quantized values.

Low-precision means, for example, INT4, INT8, FP130 (a logarithmic format), FP134, FP143, FP152, and so on. Here, in FP1xy, x means the number of exponent bits in a floating point format, and y means the number of mantissa bits in the floating point format.

High-precision means, for example, a single precision floating point (FP32), a double precision floating point (FP64), a half precision floating point (FP16), a brain floating point (bfloat16), and so on.

In addition, the artificial neural network may include artificial neural networks of various structures, such as multi-layer perceptron (MLP), a convolutional neural network (CNN), a recurrent neural network (RNN), and long short term memory (LSTM), an auto encoder, a generative adversarial network (GAN), and a graph neural network (GNN), but is not limited thereto, and an artificial neural network calculation device 100 based on parameter quantization according to the embodiment is not limited to a specific artificial neural network and is applicable to artificial neural network calculations of various structures.

A quantization technique, to which a hysteresis effect proposed by the present disclosure is applied, may change a quantization result in proportion to the amount of change in parameter. Accordingly, the artificial neural network calculation based on parameter quantization according to the embodiment significantly reduces the number of changes in quantization result value and shows stable training and high performance.

In an experiment on the artificial neural network calculation based on the parameter quantization according to the embodiment, for example, low-precision artificial neural network training using an integer format and a logarithmic format was made, and the effect described above was confirmed.

FIG. 3 is a block diagram of an artificial neural network calculation device according to an embodiment.

The artificial neural network calculation device 100 according to the embodiment includes a memory 120 and a processor 110 that store at least one instruction. The configuration is an example, and the artificial neural network calculation device 100 may include some of the configurations illustrated in FIG. 3 or may additionally include configurations not illustrated in FIG. 3 but required for an operation of the artificial neural network calculation device 100.

The processor 110 is a type of central processing unit and may control an operation of the artificial neural network calculation device 100 by executing the at least one instruction stored in the memory 120.

The processor 110 may include all types of devices capable of processing data. The processor 110 may refer to, for example, a data processing device built in hardware which includes a physically structured circuit to perform a function represented by codes or instructions included in a program.

The data processing device, which is built in hardware, may include a microprocessor, central processing unit (CPU), a processor core, a multiprocessor, an application-specific integrated circuit (ASIC), a field programmable gate array (FPGA), or so on but is not limited thereto. The processor 110 may include at least one processor.

The processor 110 may perform an artificial neural network calculation method according to an embodiment based on a program and instructions stored in the memory 120.

In addition to an artificial neural network, the memory 120 may store input data, intermediate data and calculation results generated during a parameter quantization process and artificial neural network calculation process.

The memory 120 may include an internal memory and/or an external memory, for example, a volatile memory such as dynamic random access memory (DRAM), static RAM (SRAM), or synchronous DRAM (SDRAM), a non-volatile memory such as one time programmable read only memory (OTPROM), programmable ROM (PROM), erasable PROM (EPROM), electrically EPROM EEPROM), mask ROM, flash ROM, NAND flash memory, or NOR flash memory, a flash drive such as a solid state drive (SSD), a compact flash (CF) card, a secure digital (SD) card, a micro-SD card, a mini-SD card, an extreme digital (xD) card, or a memory stick, or a storage device such as a hard disk drive (HDD). The memory 120 may include magnetic storage media or flash storage media but is not limited thereto.

The artificial neural network calculation device 100 based on parameter quantization according to an embodiment may include the memory 120 and the processor 110 that stores at least one instruction, and when the at least one instruction stored in the memory 120 is executed by the processor 110, the at least one instruction causes the processor 110 to perform a first operation of determining a parameter gradient of a parameter based on a first quantization parameter value of the parameter of the artificial neural network, a second operation of determining a second original parameter value of the parameter based on a first original parameter value associated with the parameter gradient and the first quantization parameter value determined in the first operation, and a third operation of determining a second quantization parameter value associated with the second original parameter value based on a result of comparing the first quantization parameter value with the second original parameter value.

In one example, the first quantization parameter value and the second quantization parameter value may be low-precision values, and the first original parameter value and the second original parameter value may be high-precision values.

In one example, the third operation may include an operation of determining a value obtained by rounding down the second original parameter as the second quantization parameter value when the second original parameter value is greater than the first quantization parameter value, and an operation of determining a value obtained by rounding up the second original parameter as the second quantization parameter value when the second original parameter value is less than or equal to the first quantization parameter value.

In one example, when at least one instruction stored in the memory 120 is executed by the processor 110, the at least one instruction causes the processor 110 to perform the first operation, second operation, and third operation described above for at least one parameter associated with at least one connection on a forward path or reverse path of the artificial neural network.

In one example, when at least one instruction stored in the memory 120 is executed by the processor 110, the at least one instruction causes the processor 110 to perform the first operation, second operation, and third operation for at least one parameter associated with the connection of at least some of at least one layer of the artificial neural network.

Here, the at least one connection refers to at least one of a synaptic weight, a filter weight, and a connection weight of the artificial neural network.

In one example, when at least one instruction stored in the memory 120 is executed by the processor 110, the at least one instruction causes the processor 110 to calculate an output value of the artificial neural network on input data by using the second quantization parameter value.

Hereinafter, a process of the artificial neural network calculation method performed by the artificial neural network calculation device 100 according to the embodiment is described in detail.

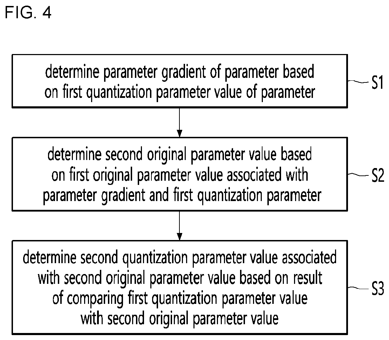

FIG. 4 is a flowchart of an artificial neural network calculation method according to an embodiment.

The artificial neural network calculation method based on parameter quantization according to the embodiment may be performed by the artificial neural network calculation device 100 including the processor 110.

The parameter quantization according to the embodiment quantizes parameters. For example, the artificial neural network calculation method according to the embodiment quantizes at least some parameters of the artificial neural network. For example, the artificial neural network calculation method according to the embodiment quantizes all parameters of the artificial neural network.

Here, the parameters include weights of the artificial neural network. For example, the parameters include a synaptic weight, a filter weight, and a connection weight of the artificial neural network.

The artificial neural network calculation method based on parameter quantization according to the embodiment includes a first step S1 of determining a parameter gradient of a parameter based on a first quantization parameter value of the parameter of the artificial neural network, a second step S2 of determining a second original parameter value of the parameter based on a first original parameter value associated with the parameter gradient and the first quantization parameter value, and a third step S3 of determining a second quantization parameter value associated with the second original parameter value based on a result of comparing the first quantization parameter value with the second original parameter value.

In the first step (S1), the processor 110 may determine the parameter gradient of a parameter based on the first quantization parameter value of the parameter of the artificial neural network.

The memory 120 may store the first quantization parameter value of the parameter. In the first step S1, the processor 110 may determine the parameter gradient of the parameter based on the previously stored first quantization parameter value of the parameter.

For example, the first quantization parameter value is a low-precision value (for example, an 8-bit floating point value FP8), and in the first step S1, the processor 110 processes determines the parameter gradient through error backpropagation by using the first quantization parameter of low precision on a set of input data.

In the second step S2, the processor 110 may determine the second original parameter value of the parameter based on the first original parameter value associated with the parameter gradient and the first quantization parameter value determined in the first step S1.

The memory 120 may store the first original parameter value associated with the first quantization parameter value. Here, the first original parameter value and the second original parameter value associated with the first quantization parameter value are high-precision value (for example, a 32-bit floating point value FP32).

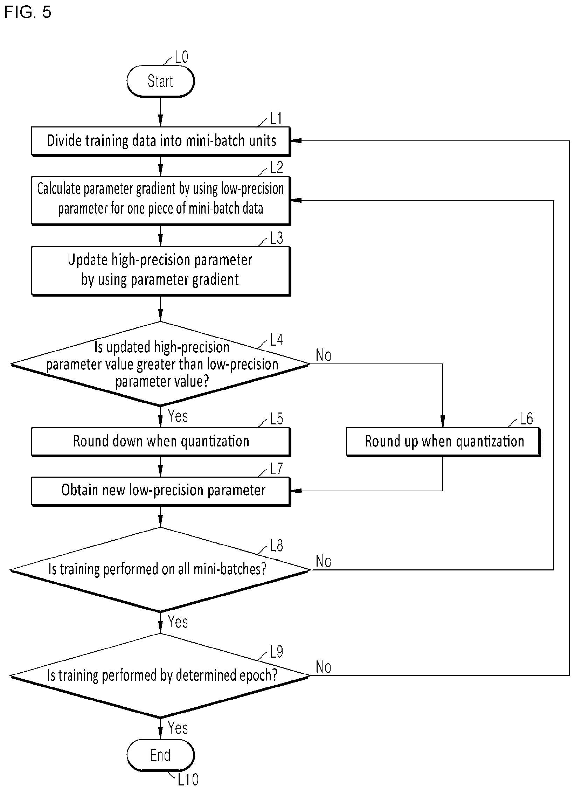

In the third step S3, the processor 110 may determine the second quantization parameter value associated with the second original parameter value based on a result of comparing the first quantization parameter value with the second original parameter value determined in the second step S2. Here, the second quantization parameter is a low-precision value (for example, an 8-bit floating point value FP8). This will be described in more detail with reference to FIG. 5.

The artificial neural network calculation method according to the embodiment may further include a step of repeating multiple times the first step S1, the second step S2, and the third step S3 by using the processor 110. For example, the first step S1, the second step S2, and the third step S3 may be performed on the first input data, and the first step S1, the second step S2, and the third step S3 may be performed on the second input data. For example, the second quantization data determined in the third step S3 on the first input data is set as the first quantization data in the first step S1 on the second input data. For example, the second original data determined in the second step S2 on the first input data is set as the first original data used in the second step S2 on the second input data.

FIG. 5 is a flowchart of a training process using an artificial neural network calculation method according to an embodiment.

The artificial neural network calculation method according to the embodiment may include step L0 to step L10 illustrated in FIG. 5. Referring to FIG. 4, step L2 corresponds to the first step S1, step L3 corresponds to the second step S2, and step L4 to step L7 correspond to the third step S3.

The artificial neural network calculation method based on parameter quantization according to an embodiment may include step L1 of dividing training data into a plurality of pieces of mini-batch data by using the processor 110, and a step of performing, on each of the plurality of pieces of mini-batch data, the first step S1 (that is, step L2), the second step S2 (that is, step L3), and the third step S3 (that is , step L4 to step L7) illustrated in FIG. 4.

In step L0, the processor 110 starts performing an artificial neural network training process by using the artificial neural network calculation method according to the embodiment.

In step L1, the processor 110 divides the entire training data into the plurality of pieces of mini-batch data.

In step L2, the processor 110 calculates a parameter gradient of a parameter by using the first quantization parameter value (for example, a low-precision parameter value) of the parameter on one piece of mini-batch data.

In step L3, the processor 110 updates the second original parameter value (for example, a high-precision parameter value) of the parameter by using the parameter gradient calculated in step L2.

In step L4, the processor 110 compares the second original parameter value (for example, a high-precision parameter value) of the parameter updated in step L3 with the first quantization parameter value (for example, a low-precision parameter value) of the parameter.

When the second original parameter value is greater than the first quantization parameter value in step L5, the processor 110 determines a value obtained by rounding down the second original parameter value as the second quantization parameter value in step L7.

When the second original parameter value is less than or equal to the first quantization parameter value in step L6, the processor 110 determines a value obtained by rounding up the second original parameter value as the second quantization parameter value in step L7.

According to the embodiment, by applying hysteresis in the quantization process, variability may be reduced, and each parameter may be trained more stably. This may be represented by Equation 1 below associated with step L4 to step L7.

[Equation 1]

$$Q_W = \begin{cases} \lfloor W \rfloor, if\ W > Q_{W'} \\ \lceil W \rceil, if\ W < Q_{W'} \end{cases}$$

Here, QW is the second quantization parameter, W is the second original parameter, and QW' is the first quantization parameter.

That is, in order to quantize a high-precision parameter W to a low-precision parameter QW, when the high-precision parameter W is less than the previous quantization value QW, rounding up is made, and when the high-precision parameter W is greater than the previous quantization value QW, rounding down is made.

In step L8, the processor 110 repeats step L2 to step L7 until training is performed (that is, step L2 to step L7 are performed) on all mini-batches divided in step L1.

Step L1 to step L8 are repeated until training is performed (that is, step L1 to step L8 are performed) by the epoch determined in step L9.

Training ends in step L10.

In one example, the plurality of pieces of mini-batch data includes the first mini-batch data and the second mini-batch data following the first mini-batch data in step L1 and the third step S3 illustrated in FIG. 4 may further include a step of setting the second quantization parameter obtained by performing the first step S1, the second step S2, and the third step S3 on the first mini-batch data as the first quantization parameter on the second mini-batch data.

In one example, the plurality of pieces of mini-batch data includes the first mini-batch data and the second mini-batch data following the first mini-batch data in step L1, and the third step S3 illustrated in FIG. 4 may further include a step of setting the second original parameter value obtained by performing the first step S1 and the second step S2 on the first mini-batch data as the first original parameter value on the second mini-batch data.

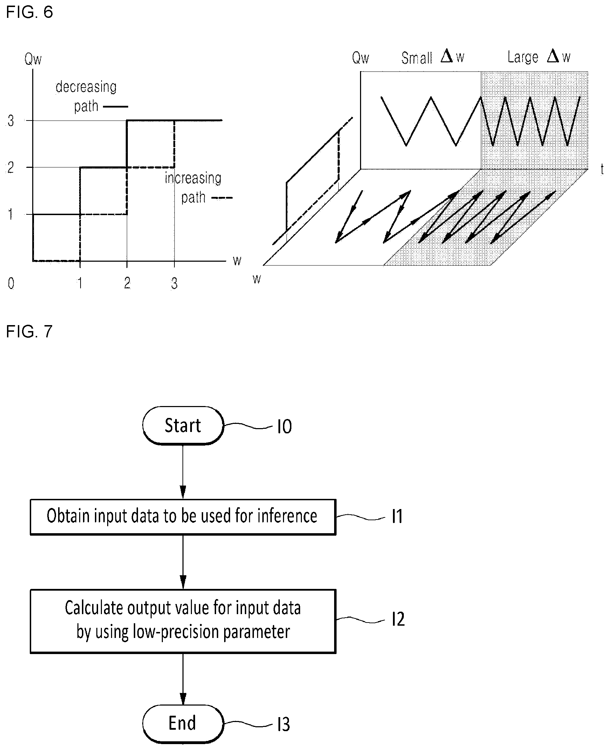

FIG. 6 illustrates an example of a result of parameter quantization using hysteresis according to an embodiment.

Unlike FIG. 1, the quantization result QW illustrated in FIG. 6 shakes slowly when the parameter W changes small, and shakes quickly when the parameter W changes greatly.

Therethrough, a change amount ΔW of the parameter W is proportional to a change amount ΔQW of a quantization result QW, and the parameter W significantly affecting loss changes greatly through a chain rule in training using error backpropagation, and thus, a training purpose may be achieved by using an artificial neural network.

FIG. 7 is a flowchart of an inference process using the artificial neural network calculation method according to the embodiment.

The inference process using the artificial neural network calculation method according to the embodiment includes step I0 to step I3.

In step I0, the inference process is started by the processor 110.

In step 11, input data to be used for inference is obtained by the processor 110.

For example, the artificial neural network calculation device 100 may receive input data which is previously stored in the memory 120 or from an external device through a communication interface of the artificial neural network calculation device 100. For example, a user may provide the input data to the artificial neural network calculation device 100 through the input interface of the artificial neural network calculation device 100. Here, the input interface may include various multi-modal interface devices capable of receiving text, voice data, and/or video data.

In step I2, the processor 110 may calculate an output value of the artificial neural network by using the second quantization parameter value on the input data obtained in step 11. Here, the second quantization parameter value is a low-precision parameter value of the parameter determined by an artificial neural network training process.

In step I3, the inference process for the input data is ended by the processor 110. For example, the output value calculated in step I2 is output through an output interface of the artificial neural network calculating device 100 in step I3. For example, in step I3, the output value is stored in the memory 120 as intermediate data or final data. For example, in step I3, the output value is transmitted to an external device through a communication unit of the artificial neural network calculation device 100.

The artificial neural network calculation method and device according to the embodiment are applicable when low-precision training on all neural network structures and tasks is performed.

According to an embodiment, a new parameter quantization method is provided which hardly reduces performance compared to full-precision in the parameter quantization process of an artificial neural network.

The artificial neural network calculation method according to the embodiment may be applied to the development of a high-performance quantization model suitable for various tasks and the design of a low-power deep learning processor.

In addition, in the quantization process according to the embodiment, convolution, a fully-connected layer, long short-term memory (LSTM), and a transformer structure were verified in image classification, object detection, and translation tasks, and an experimental result showed significant performance improvement compared to quantization by round to nearest in most cases.

The artificial neural network calculation method and device according to the embodiment maintains a structure of the known artificial neural network and changes only a parameter update method, and because the only additional operations required are size comparison and rounding up and down, and thus, he artificial neural network calculation method may be directly applied to the artificial neural network calculation device 100 (for example, a mobile device, an Internet of things (IoT) device, a neural network processing unit (NPU), or so on) that supports training by using an artificial neural network.

Also, according to the embodiment, high performance may be obtained even with low parameter precision, and thus, the artificial neural network calculation method and device according to the embodiment may be used to provide services using the artificial neural network and practicality is improved.

Furthermore, the artificial neural network calculation technology according to the embodiment has an advantage of being applicable regardless of a structure or task of the artificial neural network.

The method according to the embodiment of the present disclosure described above may be implemented as computer-readable codes on a program-recorded medium. Non-transitory computer-readable recording media include all types of recording devices storing data that may be read by a computer system. The computer-readable non-transitory recording media include, for example, a hard disk drive (HDD), a solid state disk (SSD), a silicon disk drive (SDD), ROM, RAM, compact disk-ROM (CD-ROM), a magnetic tape, a floppy disk, an optical data storage device, and so on.

The description of the embodiments according to the present disclosure described above is for illustrative purposes, and those skilled in the art to which the present disclosure pertains may understand that the present disclosure may be easily transformed into another specific form without changing the technical idea or essential features of the present disclosure. Therefore, the embodiments described above should be understood in all respects as illustrative and not restrictive. For example, each component described as single may be implemented in a distributed manner, and similarly, components described as distributed may also be implemented in a combined form.

The scope of the present disclosure is indicated by the claims described below rather than the detailed description above, and all changes or modified forms derived from the meaning and scope of the claims and their equivalent concepts should be construed as being included in the scope of the present disclosure.

The present disclosure is derived from research conducted as part of the basic research project/new research support project in the field of science and engineering (Project number: 1711156062 and Project name: Development of a high-performance and low-precision learning processor capable of deep learning of an artificial neural network with high accuracy) supported by the Ministry of Science and ICT.

## Claims

1. An artificial neural network calculation method based on parameter quantization which is performed by an artificial neural network calculation device including a processor, the artificial neural network calculation method comprising:

   a first step of determining a parameter gradient of a parameter based on a first quantization parameter value of the parameter of the artificial neural network;
   a second step of determining a second original parameter value of the parameter based on a first original parameter value associated with the parameter gradient and the first quantization parameter value; and
   a third step of determining a second quantization parameter value associated with the second original parameter value based on a result of comparing the first quantization parameter value with the second original parameter value.

2. The artificial neural network calculation method of claim 1, wherein
   the first quantization parameter value and the second quantization parameter value are low-precision values, and the first original parameter value and the second original parameter value are high-precision values.

3. The artificial neural network calculation method of claim 1, wherein
   the parameter includes a weight of the artificial neural network.

4. The artificial neural network calculation method of claim 1, further comprising:

   dividing training data into a plurality of pieces of mini-batch data; and
   performing the first step, the second step, and the third step for each of the plurality of pieces of mini-batch data.

5. The artificial neural network calculation method of claim 4, wherein

   the plurality of pieces of mini-batch data includes first mini-batch data and second mini-batch data following the first mini-batch data, and
   the third step further includes setting a second quantization parameter obtained by performing the first step, the second step, and the third step for the first mini-batch data as a first quantization parameter for the second mini-batch data.

6. The artificial neural network calculation method of claim 4, wherein

   the plurality of pieces of mini-batch data includes first mini-batch data and second mini-batch data following the first mini-batch data, and
   the third step further includes setting a second original parameter value obtained by performing the first step and the second step for the first mini-batch data as a first original parameter value for the second mini-batch data.

7. The artificial neural network calculation method of claim 1, wherein
   the third step includes determining a value obtained by rounding down the second original parameter value as the second quantization parameter value when the second original parameter value is greater than the first quantization parameter value, and determining a value obtained by rounding up the second original parameter value as the second quantization parameter value when the second original parameter value is less than or equal to the first quantization parameter value.

8. The artificial neural network calculation method of claim 1, further comprising:
   calculating an output value of the artificial neural network by using the second quantization parameter value for input data.

9. An artificial neural network calculation device based on parameter quantization, the artificial neural network calculation device comprising:

   a memory storing at least one instruction; and
   a processor,
   wherein, when the at least one instruction is executed by the processor, the at least one instruction causes the processor to perform a first operation of determining a parameter gradient of a parameter based on a first quantization parameter value of the parameter of the artificial neural network, a second operation of determining a second original parameter value of the parameter based on a first original parameter value associated with the parameter gradient and the first quantization parameter value; and a third operation of determining a second quantization parameter value associated with the second original parameter value based on a result of comparing the first quantization parameter value with the second original parameter value.

10. The artificial neural network calculation device of claim 9, wherein
    the first quantization parameter value and the second quantization parameter value are low-precision values, and the first original parameter value and the second original parameter value are high-precision values.

11. The artificial neural network calculation device of claim 9, wherein
the third operation includes an operation of determining a value obtained by rounding down the second original parameter as the second quantization parameter value when the second original parameter value is greater than the first quantization parameter value, and determining a value obtained by rounding up the second original parameter as the second quantization parameter value when the second original parameter value is less than or equal to the first quantization parameter value.

12. The artificial neural network calculation device of claim 9, wherein
when the at least one instruction is executed by the processor, the at least one instruction causes the processor to perform the first operation, the second operation, and the third operation on at least one parameter associated with at least one connection on a forward path of the artificial neural network.

13. The artificial neural network calculation device of claim 9, wherein
when the at least one instruction is executed by the processor, the at least one instruction causes the processor to perform the first operation, the second operation, and the third operation on at least one parameter associated with a connection of at least some of at least one layer of the artificial neural network.

14. The artificial neural network calculation device of claim 9, wherein
when the at least one instruction is executed by the processor, the at least one instruction causes the processor to calculate an output value of the artificial neural network by using the second quantization parameter value for input data.

15. A computer-readable non-transitory recording medium storing at least one instruction and configured to perform, by an artificial neural network calculation device including a processor, the artificial neural network calculation method according to any one of claims 1 to 8.

FIG. 1

FIG. 2

$$Q\_P_i \qquad \longrightarrow \qquad P\_G_{i+1} \longrightarrow \qquad O\_P_{i+1} \qquad \longrightarrow \qquad Q\_P_{i+1}$$
$$O\_P_i$$

FIG. 3

100

FIG. 4

```
┌─────────────────────────────────────────────┐
│   determine parameter gradient of parameter  │
│   based on first quantization parameter       │──── S1
│   value of parameter                          │
└─────────────────────────────────────────────┘
                      │
                      ▼
┌─────────────────────────────────────────────┐
│   determine second original parameter value   │
│   based on first original parameter value     │──── S2
│   associated with parameter gradient and      │
│   first quantization parameter                │
└─────────────────────────────────────────────┘
                      │
                      ▼
┌─────────────────────────────────────────────┐
│  determine second quantization parameter value│
│  associated with second original parameter     │
│  value based on result of comparing first      │──── S3
│  quantization parameter value with second      │
│  original parameter value                      │
└─────────────────────────────────────────────┘
```

FIG. 5

Start — L0

Divide training data into mini-batch units — L1

Calculate parameter gradient by using low-precision parameter for one piece of mini-batch data — L2

Update high-precision parameter by using parameter gradient — L3

Is updated high-precision parameter value greater than low-precision parameter value? — L4

No

Round down when quantization — L5

Round up when quantization — L6

Obtain new low-precision parameter — L7

Is training performed on all mini-batches? — L8

No

Is training performed by determined epoch? — L9

No

Yes

End — L10

FIG. 6

FIG. 7

## INTERNATIONAL SEARCH REPORT

International application No.

**PCT/KR2022/010829**

### A. CLASSIFICATION OF SUBJECT MATTER

**G06N 3/08**(2006.01)i; **G06N 3/04**(2006.01)i; **G06N 5/04**(2006.01)i

According to International Patent Classification (IPC) or to both national classification and IPC

### B. FIELDS SEARCHED

Minimum documentation searched (classification system followed by classification symbols)

G06N 3/08(2006.01); G06N 20/00(2019.01); G06N 3/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공 신경망(artificial neural network), 양자화(quantization), 파라미터(parameter), 기울기(gradient), 이력 현상(hysteresis)

### C. DOCUMENTS CONSIDERED TO BE RELEVANT

| Category* | Citation of document, with indication, where appropriate, of the relevant passages | Relevant to claim No. |
|---|---|---|
| A | JIN, Kenya et al. A Hysteresis Quantizer. Electronics and Communications in Japan. Part 3, Vol. 83, No. 4, April 2000.<br>See pages 1-6. | 1-15 |
| A | US 2018-0211166 A1 (PREFERRED NETWORKS, INC.) 26 July 2018 (2018-07-26)<br>See paragraphs [0018]-[0029]; and figures 1-2. | 1-15 |
| A | YOUSEFZADEH, Amirreza et al. Conversion of Synchronous Artificial Neural Network to Asynchronous Spiking Neural Network using sigma-delta quantization. 2019 IEEE International Conference on Artificial Intelligence Circuits and Systems (AICAS). pp. 81–85, 20 March 2019.<br>See pages 81-84. | 1-15 |
| A | KR 10-2018-0043154 A (SAMSUNG ELECTRONICS CO., LTD.) 27 April 2018 (2018-04-27)<br>See claims 1-12. | 1-15 |
| A | US 2020-0394522 A1 (SHANGHAI CAMBRICON INFORMATION TECHNOLOGY CO., LTD.) 17 December 2020 (2020-12-17)<br>See claims 1-18. | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 December 2022** | **22 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/010829**

| Patent document cited in search report | | | Publication date (day/month/year) | Patent family member(s) | | | Publication date (day/month/year) |
|---|---|---|---|---|---|---|---|
| US | 2018-0211166 | A1 | 26 July 2018 | JP | 2018-120441 | A | 02 August 2018 |
| | | | | JP | 6227813 | B1 | 08 November 2017 |
| KR | 10-2018-0043154 | A | 27 April 2018 | CN | 107967515 | A | 27 April 2018 |
| | | | | KR | 10-2382125 | B1 | 01 April 2022 |
| | | | | TW | 201816669 | A | 01 May 2018 |
| | | | | TW | I767922 | B | 21 June 2022 |
| | | | | US | 11321609 | B2 | 03 May 2022 |
| | | | | US | 2018-0107925 | A1 | 19 April 2018 |
| US | 2020-0394522 | A1 | 17 December 2020 | US | 2020-0394523 | A1 | 17 December 2020 |

Form PCT/ISA/210 (patent family annex) (July 2022)